# EUROPEAN PATENT APPLICATION

(11) **EP 4 498 457 A2**
(43) Date of publication of application: **29.01.2025**
(21) Application number: 24188782.7
(22) Date of filing: 16.07.2024
(51) Int. Cl.: H01M 8/04119, H01M 8/0662

(54) **SYSTEM FOR A FUEL CELL VEHICLE, AN EXHAUST FLUID PROCESSING DEVICE, THE FUEL CELL VEHICLE, AND METHODS FOR HANDLING A FUEL CELL EXHAUST FLUID OF A FUEL CELL SYSTEM OF THE FUEL CELL VEHICLE**

(30) Priority: 25.07.2023 SE 2350924
(71) Applicant: VOLVO TRUCK CORPORATION, 405 08 Göteborg (SE)
(72) Inventor: LÖWSTEDT, Carl, 439 36 Onsala (SE); RAHM, Fredrik, 242 96 Hörby (SE); HRUSTIC, Adnan, 418 77 Göteborg (SE); GONA, Bala Narasimha Reddy, 560043 Bengaluru, Karnataka (IN)
(74) Representative: Valea AB

(57) **Abstract**

At least one system for a fuel cell vehicle, an exhaust fluid processing device, the vehicle, and methods therein are provided. The system comprises a fuel cell system producing a fuel cell exhaust fluid as a byproduct of its operation, and an exhaust assembly comprising an exhaust conduit and an exhaust fluid processing device configured to process the exhaust fluid. The device comprises a housing (70) encompassing a chamber (72) and comprising an inlet port (74) configured to receive the fuel cell exhaust fluid, a first outlet port (76) configured to allow the liquid water to exit the housing, a second outlet port (78) configured to allow the dry vapor to exit the housing, and a third outlet port (80) configured to allow the hydrogen gas to exit the housing. The housing comprises, positioned in the chamber, a centrifugal separator (84). The housing (70) may also comprise at least one demister (82A, 82B) that may be positioned upstream and/or downstream of the centrifugal separator (84).

## Description

### TECHNICAL FIELD

The disclosure relates generally to a system for a fuel cell vehicle, the fuel cell vehicle, an exhaust assembly, an exhaust fluid processing device and methods for processing or handling a fuel cell exhaust fluid produced by a fuel cell system of the fuel cell vehicle.

The disclosure can be applied in heavy-duty vehicles, such as trucks, buses, and construction equipment.

### BACKGROUND

Fuel cells are considered a promising, more environmentally friendly alternative to conventional internal combustion engines, for powering a vehicle. Thus, fuel cells are increasingly considered for powering fuel cell electric vehicles (FCEVs), such as e.g. pure electric vehicles and hybrid electric vehicles.

In a fuel cell vehicle, a fuel cell system comprises one or more, and typically hundreds of fuel cells forming a fuel cell stack for generating the desired power supplied to the vehicle. A fuel cell is an electrochemical device that includes an anode and a cathode, and an electrolyte such as e.g. a proton exchange membrane (PEM) sandwiched between the anode and cathode. The anode receives hydrogen gas used as a fuel that is reacted with oxygen or ambient air received by the cathode and used as an oxidant. Electrochemical reaction between the hydrogen and oxygen releases energy used to power the vehicle. The electrochemical reaction creates, as a byproduct, a fuel cell exhaust fluid comprising water, in liquid and steam forms, and heat. The fuel cell exhaust fluid may also comprise certain amounts of hydrogen, nitrogen, oxygen, as well as contaminants.

As the fuel cell system is operating, the generated fuel cell exhaust fluid needs to be carried away from the fuel cell system and the vehicle and/or reused in some way. In general, handling the fuel cell system exhaust presents a challenging problem. In particular, collecting, processing, and discharging or reusing the fuel cell exhaust fluid, which is expelled by the fuel cell system as the fuel cell system is operating, is a known challenge in the automotive industry.

Approaches exist to handling the fuel cell exhaust fluid. For example, the fuel cell exhaust fluid may be processed such that liquid water and steam are extracted from the fuel cell exhaust fluid. When the steam is released, for example, at a top of the vehicle such as a truck with a trailer, the steam may land on the trailer and on vehicles traveling behind, which is not desirable. Moreover, the steam may be visible and it may thus obstruct a view of the vehicle's driver and of other drivers on the road. Other issues exist that are related to processing the fuel cell exhaust fluid and expelling it and/or its constituents from the vehicle.

Accordingly, there exists a need for improved systems and methods for handling a fuel cell exhaust produced by the fuel cell system of a fuel cell vehicle.

### SUMMARY

In an aspect, a system for a fuel cell vehicle is provided. The system comprises a fuel cell system and an exhaust assembly. The fuel cell system comprises at least one fuel cell stack comprising an anode and a cathode, the fuel cell stack being configured to generate electricity by an electrochemical reaction between hydrogen supplied to the anode and oxygen supplied to the cathode, the electrochemical reaction producing a fuel cell exhaust fluid as a byproduct. The exhaust assembly comprises an exhaust conduit configured to fluidly couple to the fuel cell system, and an exhaust fluid processing device configured to fluidly couple to the exhaust conduit. The exhaust fluid processing device comprises a housing encompassing a chamber and comprising an inlet port configured to receive the exhaust fluid, a first outlet port, a second outlet port, and a third outlet port. The housing further comprises, positioned in the chamber, a centrifugal separator comprising at least one swirler and configured to have the exhaust fluid to pass therethrough so that the exhaust fluid passing through the centrifugal separator is separated into liquid water, hydrogen gas, and dry exhaust vapor, wherein the first outlet port is configured to allow the liquid water to exit the housing, the second outlet port is configured to allow the dry vapor to exit the housing, and the third outlet port is configured to allow the hydrogen gas to exit the housing.

A technical benefit includes simultaneously separating a flow of the fuel cell exhaust fluid into three separate flows of hydrogen, liquid water, and dry vapor that may include no or only a small amount of hydrogen. Another advantage is that the system for the fuel cell vehicle and the exhaust fluid processing device allow processing the fuel cell exhaust fluid in a straightforward and efficient manner, such that a relatively simple system and device allow carrying the processed fuel cell exhaust away from the fuel cell system and away from the vehicle via three separate flows.

In some examples, the third outlet port may be configured to couple to a third conduit extending from the third outlet port and towards a top of a cabin of the vehicle, the third conduit being configured to release the hydrogen gas at the top of the cabin of the vehicle.

In some examples, the first outlet port may be configured to fluidly couple to a first conduit that allows the liquid water to exit the exhaust conduit at a bottom of the vehicle, and the second outlet port may be configured to fluidly couple to a second conduit that allows the dry vapor to exit the exhaust conduit at the bottom of the vehicle. In some examples, the first outlet port and/or first conduit may be configured to fluidly couple to a fluid storage container such as e.g. a water tank configured to collect and store the liquid water. The liquid water stored in the fluid storage container may be used for various purposes in the fuel cell vehicle and possibly outside of the vehicle.

Technical benefits may include, among others, routing the dry vapor or steam to under the vehicle such that the dry vapor or steam is released to the outside at the bottom of the vehicle i.e. from under the vehicle, like in conventional diesel and gasoline vehicles. Accordingly, fewer modifications to existing vehicle designs will need to be made to accommodate for release of the dry vapor, as part of the processing of the fuel cell exhaust flow which is a byproduct of operation of the fuel cell system of the fuel cell system vehicle.

The release of the vapor or steam from under the vehicle is advantageous as compared to releasing the vapor or steam from the top of the vehicle. The vapor, as released by a fuel cell vehicle, may look like a white fog or cloud, and may therefore obscure visibility of the driver of the vehicle and visibility of drivers of other vehicles on the road. Thus, releasing the vapor from under the vehicle eliminates this issue. The release of hydrogen gas from the top of the vehicle, separately from the vapor, is advantageous because the risk of the hydrogen rising up through the vehicle in an uncontrolled manner and/or the risk of hydrogen being accumulated in one or more confined spaces is reduced. The hydrogen is evacuated upwards via e.g. a thin long conduit and is released from the top of the vehicle, which is beneficial since there is no uncontrolled hydrogen flow in the cabin and other compartments of the vehicle. In this way, the fuel cell vehicle may be operated in a safer manner.

In some examples, the first outlet port may comprise a first valve configured and/or controlled to selectively allow the liquid water to pass through first outlet port and away from the exhaust fluid processing device.

In some examples, the third outlet port may comprise a second valve configured and/or controlled to allow the hydrogen gas to pass therethrough and away from the exhaust fluid processing device, and wherein the second valve may be configured to release overpressure in the exhaust fluid processing device.

In some examples, the housing may comprise a membrane positioned in the housing below the third outlet port and above the centrifugal separator, along at least a portion of a length of the centrifugal separator. The membrane may be configured to selectively pass the hydrogen gas therethrough and towards the third outlet port. In some examples, the membrane may be configured to allow hydrogen gas, as well as vapor or steam to pass therethrough.

In some examples, the inlet port may be positioned at a first end of the housing, and the first, second, and third outlet ports may be positioned at a second end of the housing.

In some examples, the housing may comprise at least one demister positioned downstream of the inlet port and having a shape that conforms to a shape of an inner wall of the chamber, the at least one demister being configured to have the exhaust fluid pass therethrough to cause at least a portion of vapor in the exhaust fluid to be converted into water droplets, whereby liquid water is extracted from the exhaust fluid.

In some examples, the at least one demister comprises one demister positioned upstream of the centrifugal separator.

In some examples, the at least one demister comprises one demister positioned downstream of the centrifugal separator.

In some examples, the at least one demister comprises a first demister positioned upstream of the centrifugal separator and a second demister positioned downstream of the centrifugal separator.

In an aspect, an exhaust fluid processing device is provided that is configured to process a fuel cell exhaust fluid produced by a fuel cell system of a fuel cell vehicle as a byproduct of an electrochemical reaction between hydrogen supplied to an anode and oxygen supplied to a cathode of a fuel cell stack of the fuel cell system. The exhaust fluid processing device comprises a housing encompassing a chamber and comprising an inlet port configured to receive the exhaust fluid, a first outlet port, a second outlet port, and a third outlet port. The housing further comprises, positioned in the chamber, a centrifugal separator comprising at least one swirler and configured to have the exhaust fluid to pass therethrough so that the exhaust fluid passing through the centrifugal separator is separated into liquid water, hydrogen gas, and dry exhaust vapor, wherein the first outlet port is configured to allow the liquid water to exit the housing, the second outlet port is configured to allow the dry vapor to exit the housing, and the third outlet port is configured to allow the hydrogen gas to exit the housing.

In some examples, the third outlet port may be configured to fluidly couple to a third conduit extending from the third outlet port and towards a top of a cabin of the vehicle, the third conduit being configured to release the hydrogen gas at the top of the cabin of the vehicle.

In some examples, the first outlet port may be configured to fluidly couple to a first conduit that allows the liquid water to exit the exhaust conduit at a bottom of the vehicle, and the second outlet port may be configured to fluidly couple to a second conduit that allows the dry vapor to exit the exhaust conduit at the bottom of the vehicle.

In some examples, the first outlet port may comprise a first valve configured and/or controlled to selectively allow the liquid water to pass through first outlet port and away from the exhaust fluid processing device.

In some examples, the third outlet port may comprise a second valve configured and/or controlled to allow the hydrogen gas to pass therethrough and away from the exhaust fluid processing device, and wherein the second valve may be configured to release overpressure in the exhaust fluid processing device.

In some examples, the housing comprises a membrane positioned in the housing below the third outlet port and above the centrifugal separator, along at least a portion of a length of the centrifugal separator. In some examples, the membrane may be configured to allow hydrogen gas, as well as vapor or steam to pass therethrough, to controllably release or reduce the pressure such as overpressure in the chamber of the housing of the exhaust fluid processing device.

In some examples, the housing comprises, positioned in the chamber, at least one demister positioned downstream of the inlet port and having a shape that conforms to a shape of an inner wall of the chamber, the at least one demister being configured to have the exhaust fluid pass therethrough to cause at least a portion of vapor in the exhaust fluid to be converted into water droplets, whereby liquid water is extracted from the exhaust fluid. In some examples, the at least one demister comprises one demister positioned upstream of the centrifugal separator. In some examples, the at least one demister comprises one demister positioned downstream of the centrifugal separator. In some examples, the at least one demister comprises a first demister positioned upstream of the centrifugal separator and a second demister positioned downstream of the centrifugal separator.

In an aspect, a fuel cell vehicle comprising at least one system is provided. The at least one system comprises a fuel cell system and an exhaust assembly. The fuel cell system comprises at least one fuel cell stack comprising an anode and a cathode, the fuel cell stack being configured to generate electricity by an electrochemical reaction between hydrogen supplied to the anode and oxygen supplied to the cathode, the electrochemical reaction producing a fuel cell exhaust fluid as a byproduct. The exhaust assembly comprises an exhaust conduit configured to fluidly couple to the fuel cell system, and an exhaust fluid processing device configured to fluidly couple to the exhaust conduit. The exhaust fluid processing device comprises a housing encompassing a chamber and comprising an inlet port configured to receive the exhaust fluid, a first outlet port, a second outlet port, and a third outlet port. The housing further comprises, positioned in the chamber, a centrifugal separator comprising at least one swirler and configured to have the exhaust fluid to pass therethrough so that the exhaust fluid passing through the centrifugal separator is separated into liquid water, hydrogen gas, and dry exhaust vapor, wherein the first outlet port is configured to allow the liquid water to exit the housing, the second outlet port is configured to allow the dry vapor to exit the housing, and the third outlet port is configured to allow the hydrogen gas to exit the housing.

In some examples, the third outlet port may be configured to couple to a third conduit extending from the third outlet port and towards a top of a cabin of the vehicle, the third conduit being configured to release the hydrogen gas at the top of the cabin of the vehicle.

In some examples, the first outlet port may be configured to fluidly couple to a first conduit that allows the liquid water to exit the exhaust conduit at a bottom of the vehicle, and the second outlet port may be configured to fluidly couple to a second conduit that allows the dry vapor to exit the exhaust conduit at the bottom of the vehicle.

In some examples, the first outlet port may comprise a first valve configured and/or controlled to selectively allow the liquid water to pass through first outlet port and away from the exhaust fluid processing device.

In some examples, the third outlet port may comprise a second valve configured and/or controlled to allow the hydrogen gas to pass therethrough and away from the exhaust fluid processing device, and wherein the second valve may be configured to release overpressure in the exhaust fluid processing device.

In some examples, the housing comprises a membrane positioned in the housing below the third outlet port and above the centrifugal separator, along at least a portion of a length of the centrifugal separator. In some examples, the membrane may be configured to allow hydrogen gas, as well as vapor or steam to pass therethrough, to controllably release or reduce the pressure such as overpressure in the chamber of the housing of the exhaust fluid processing device.

In some examples, the inlet port may be positioned at a first end of the housing, and the first, second, and third outlet ports may be positioned at a second end of the housing.

In some examples, the housing comprises at least one demister positioned downstream of the inlet port and having a shape that conforms to a shape of an inner wall of the chamber, the at least one demister being configured to have the exhaust fluid pass therethrough to cause at least a portion of vapor in the exhaust fluid to be converted into water droplets, whereby liquid water is extracted from the exhaust fluid.

In some examples, the at least one demister comprises one demister positioned upstream of the centrifugal separator.

In some examples, the at least one demister comprises one demister positioned downstream of the centrifugal separator.

In some examples, the at least one demister comprises a first demister positioned upstream of the centrifugal separator and a second demister positioned downstream of the centrifugal separator.

In some examples, in the vehicle, the at least one system comprises two systems, each of the two systems comprising a corresponding fuel cell system and an exhaust assembly configured to fluidly couple to the corresponding fuel cell system. In some examples, the at least one system comprises one system. In some examples, the at least one system comprises more than two systems.

In an aspect, a method for processing a fuel cell exhaust fluid produced by a fuel cell system of a fuel cell vehicle is provided. The method comprises routing the fuel cell exhaust fluid from the fuel cell system to and through an exhaust assembly comprising an exhaust conduit configured to fluidly couple to the fuel cell system, the exhaust assembly comprising an exhaust fluid processing device configured to fluidly couple to the exhaust conduit, the exhaust fluid processing device being configured to process the fuel cell exhaust fluid so as to separate the exhaust fluid into separate flows of liquid water, hydrogen gas, and dry exhaust vapor.

The exhaust fluid processing device comprises a housing encompassing a chamber and comprising an inlet port configured to receive the exhaust fluid, a first outlet port, a second outlet port, and a third outlet port. The housing further comprises, positioned in the chamber, a centrifugal separator comprising at least one swirler and configured to have the exhaust fluid to pass therethrough so that the exhaust fluid passing through the centrifugal separator is separated into the liquid water, the hydrogen gas, and the dry exhaust vapor, wherein the first outlet port is configured to allow the liquid water to exit the housing, the second outlet port is configured to allow the dry vapor to exit the housing, and the third outlet port is configured to allow the hydrogen gas to exit the housing. In some examples, the housing may comprise at least one demister positioned downstream of the inlet port and having a shape that conforms to a shape of an inner wall of the chamber, the at least one demister being configured to have the fuel cell exhaust fluid pass therethrough to cause at least a portion of vapor in the fuel cell exhaust fluid to be converted into water droplets, whereby liquid water is extracted from the fuel cell exhaust fluid.

In an aspect, a method for processing a fuel cell exhaust fluid produced by a fuel cell system of a fuel cell vehicle is provided. The method comprises routing the fuel cell exhaust fluid from the fuel cell system to and through an exhaust fluid processing device configured to process the fuel cell exhaust fluid. The exhaust fluid processing device comprises a housing encompassing a chamber and comprising an inlet port configured to receive the fuel cell exhaust fluid, a first outlet port, a second outlet port, and a third outlet port. The housing further comprises, positioned in the chamber, a centrifugal separator comprising at least one swirler and configured to have the fuel cell exhaust fluid to pass therethrough so that the fuel cell exhaust fluid passing through the centrifugal separator is separated into liquid water, hydrogen gas, and dry exhaust vapor, wherein the first outlet port is configured to allow the liquid water to exit the housing, the second outlet port is configured to allow the dry vapor to exit the housing, and the third outlet port is configured to allow the hydrogen gas to exit the housing.

In some examples, the housing may comprise at least one demister positioned downstream of the inlet port and having a shape that conforms to a shape of an inner wall of the chamber, the at least one demister being configured to have the fuel cell exhaust fluid pass therethrough to cause at least a portion of vapor in the fuel cell exhaust fluid to be converted into water droplets, whereby liquid water is extracted from the fuel cell exhaust fluid.

In some examples, the at least one demister may comprise one demister positioned upstream of the centrifugal separator. In some examples, the at least one demister may comprise one demister positioned downstream of the centrifugal separator. In some examples, the at least one demister may comprise a first demister positioned upstream of the centrifugal separator and a second demister positioned downstream of the centrifugal separator.

In some examples, the third outlet port may be configured to couple to a third conduit extending from the third outlet port and towards a top of a cabin of the vehicle, the third conduit being configured to release the hydrogen gas at the top of the cabin of the vehicle.

In some examples, the first outlet port may be configured to fluidly couple to a first conduit that allows the liquid water to exit the exhaust conduit at a bottom of the vehicle, and the second outlet port may be configured to fluidly couple to a second conduit that allows the dry vapor to exit the exhaust conduit at the bottom of the vehicle.

In some examples, the first outlet port may comprise a first valve configured and/or controlled to selectively allow the liquid water to pass through first outlet port and away from the exhaust fluid processing device.

In some examples, the third outlet port may comprise a second valve configured and/or controlled to allow the hydrogen gas to pass therethrough and away from the exhaust fluid processing device, and wherein the second valve may be configured to release overpressure in the exhaust fluid processing device.

In some examples, the housing may comprise a membrane positioned in the housing below the third outlet port and above the centrifugal separator, along at least a portion of a length of the centrifugal separator. The membrane may be configured to selectively pass the hydrogen gas therethrough and towards the third outlet port. In some examples, the membrane may be configured to allow hydrogen gas, as well as vapor or steam to pass therethrough.

The technical advantages of the system, exhaust fluid processing device, and method herein include routing vapor or steam under the vehicle and releasing the vapor or steam from under the vehicle, like in conventional diesel and gasoline vehicles. Accordingly, fewer modifications to existing vehicle designs will need to be made to accommodate for release of the vapor as a byproduct of operation of the fuel cell system of the fuel cell system vehicle.

The release of the vapor or steam from under the vehicle is advantageous as compared to releasing the vapor or steam from the top of the vehicle, because a possible visibility issue, associated with the visible vapor released on top of the vehicle, is reduced or eliminated. Moreover, at least a portion of the steam is converted into water, and the amount of the steam discharged under the vehicle is reduced, such that overall amount of steam released to the outside is reduced. Furthermore, the release of hydrogen gas from the top of the vehicle, separately from the vapor, is advantageous because the risk of the hydrogen rising up through the vehicle in an uncontrolled manner is reduced. Also, the risk of the hydrogen being accumulated in a confined space, which may occur if hydrogen is released from under the vehicle, may advantageously be eliminated since the hydrogen is released from above the vehicle.

Furthermore, overall, the exhaust fluid processing device advantageously allows processing the fuel cell exhaust fluid in a straightforward and efficient manner, such that a relatively simple device allows carrying the processed exhaust away from the fuel cell system and then away from the vehicle via three separate flows.

Additional features and advantages are disclosed in the following description, claims, and drawings. Furthermore, additional advantages will be readily apparent from the present disclosure to those skilled in the art or recognized by practicing the disclosure as described herein. There are also disclosed herein control units, computer program products, and computer-readable media associated with the above discussed technical effects and corresponding advantages.

### BRIEF DESCRIPTION OF THE DRAWINGS

With reference to the appended drawings, below follows a more detailed description of aspects of the disclosure cited as examples.
**FIG. 1** illustrates a side view of an example of a fuel cell vehicle comprising an exhaust fluid processing device in accordance with aspects of the present disclosure.
**FIG. 2** is a block diagram illustrating a fuel cell system and a controller of the fuel cell vehicle of FIG. 1, in accordance with an example.
**FIG. 3** illustrates a perspective view of an exhaust fluid processing device, in accordance with an example.
**FIGs. 4A** and **4B** illustrate perspective side cross-sectional views of the exhaust fluid processing device of FIG. 3, in accordance with an example.
**FIG. 5A** illustrates a demister of FIG. 3, in accordance with an example.
**FIG. 5B** illustrates an enlarged view of a portion of the demister of FIG. 5A, in accordance with an example.
**FIG. 6A** illustrates a perspective view of a centrifugal separator of FIG. 3, in accordance with an example.
**FIG. 6B** illustrates a perspective side cross-sectional views of the centrifugal separator of FIG. 6A, in accordance with an example.
**FIG. 7A** illustrates a side cross-sectional view of the exhaust fluid processing device of FIG. 3, in accordance with an example.
**FIG. 7B** illustrates a side cross-sectional view of the exhaust fluid processing device of FIG. 3, in accordance with another example.
**FIG. 8** illustrates a side cross-sectional view of an exhaust fluid processing device, showing one demister positioned upstream of the centrifugal separator, in accordance with an example.
**FIG. 9** illustrates a side cross-sectional view of an exhaust fluid processing device, showing one demister positioned downstream of the centrifugal separator, in accordance with an example.
**FIG. 10** illustrates a side cross-sectional view of an exhaust fluid processing device, without a demister, in accordance with an example.

### DETAILED DESCRIPTION

A fuel cell system of a fuel cell vehicle, as a result of the electrochemical reaction between hydrogen and oxygen or air which produces electrical power, produces fluid, referred to as an exhaust fluid or a fuel cell exhaust fluid, such as a mixture of liquid water, water vapor or steam, and certain amounts of hydrogen, oxygen, and nitrogen mixed with the liquid and vapor phases. Certain contaminants may also be present in the exhaust fluid.

There are issues that may arise in conjunction with handling and discharging the fuel cell exhaust fluid. For example, when vapor phase of the fuel cell exhaust fluid is released from a top of the vehicle, the vapor may create a fog-like cloud behind the vehicle, thereby obscuring visibility on the roads. In existing approaches, the vapor may be released together with hydrogen.

Accordingly, as a number of fuel cell vehicles on the roads increases, handling exhaust fluid discharged by the vehicles presents a challenge that needs to be addressed. A system for a fuel cell vehicle, an exhaust assembly of the system, and an exhaust fluid processing device in accordance with examples of the present disclosure address this need. More specifically, the exhaust fluid processing device configured to be included in the system for the fuel cell vehicle is configured to handle and/or process the fuel cell exhaust fluid, which is routed to pass through the exhaust fluid processing device such that the processed fuel cell exhaust fluid is separated into three separate exhaust flows of liquid water, hydrogen gas, and vapor which are directed to be released from the device via respective separate outlet ports. Liquid water is extracted from the vapor or steam such that an amount of vapor or steam in the processed fuel cell exhaust fluid, as compared to an amount of vapor or steam in the unprocessed exhaust flow that is expelled by the fuel cell system, is reduced. The vapor or steam, which may include only small amounts of liquid water and hydrogen, is routed to be released from under the fuel cell vehicle. This is advantageous because the vapor is removed from the vehicle close to the road and, unlike in vehicles where the vapor is released from the top of the vehicle, does not create visibility issues on the roads. The liquid water can similarly be released under the vehicle, which may occur upon a trigger. The water may also be collected and stored for use or reuse. The hydrogen gas is evacuated upwards via e.g. a thin long conduit and is released from the top of the vehicle, which is beneficial since there is no uncontrolled hydrogen flow in the cabin and other compartments of the vehicle.

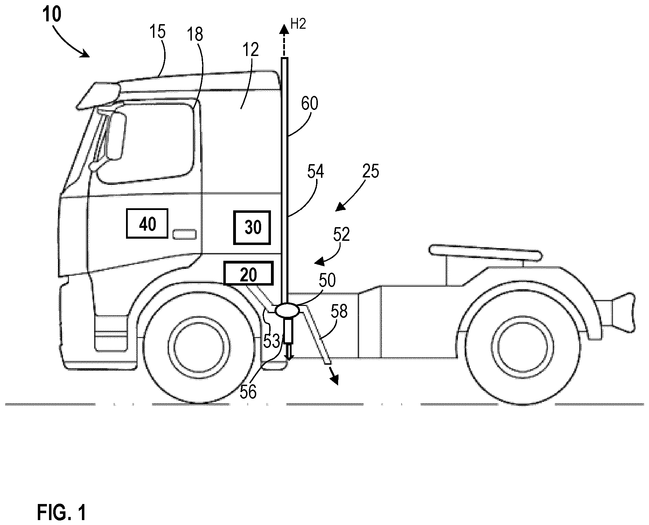

**FIG. 1** depicts a side view of a vehicle 10 according to an example of the present disclosure. The vehicle 10 is shown in FIG. 1 as a truck, such as a heavy-duty truck for towing one or more trailers (not shown). The vehicle 10 may be a fuel cell electric vehicle (FCEV) or a hybrid vehicle comprising a fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel.

As shown schematically in FIG. 1, the vehicle 10 comprises at least one system 25 comprising a fuel cell system 20 and an exhaust assembly 52 in fluid communication with the fuel cell system 20. The fuel cell system 20 produces a fuel cell exhaust, also referred to as a fuel cell exhaust fluid or an exhaust fluid, as a byproduct of the electrochemical reaction that generates electrical energy or power. The exhaust assembly 52 is configured to receive the exhaust fluid discharged by the fuel cell system 20, to process the exhaust fluid, and to convey the processed exhaust fluid away from the fuel cell system 20 and away from the vehicle e.g. to the outside and/or to a fluid storage container. The exhaust assembly 52 comprises an exhaust conduit 54 and an exhaust processing device 50 in fluid communication with the exhaust conduit 54. The exhaust processing device 50 is configured to fluidly couple with the exhaust conduit 54 via e.g. a portion such as a passage or conduit 53 of the exhaust conduit 54 shown in FIG. 1. In examples in accordance with the present disclosure, the exhaust assembly 52 is configured to separate the fuel cell exhaust fluid into a first exhaust flow comprising liquid water, a second exhaust flow comprising dry vapor, and a third exhaust flow comprising hydrogen gas.

As used herein, the term "dry vapor", also referred to herein as dry steam, refers to vapor extracted or separated from the fuel cell exhaust fluid that is in a less wet state, or in other words in a drier state than a state in which the vapor was in the fuel cell exhaust fluid as expelled from the fuel cell system. The dry vapor may include a certain amount of moisture, but it is primarily dry or drier as compared to the vapor phase of the fuel cell exhaust fluid before the fuel cell exhaust fluid has passed through the exhaust fluid processing device 50.

The liquid water, separated from the dry vapor, may include a certain amount of vapor, but this would be a lesser amount than in the fuel cell exhaust fluid as expelled from the fuel cell system.

The first, second, and third exhaust flows are released via respective separate first, second, and third lines, passages, or conduits. As shown in FIG. 1, the exhaust processing device 50 is positioned so that it is coupled to and in fluid communication with the exhaust conduit 54 so as to separate the exhaust fluid into three exhaust flows and release the exhaust flows such that the first exhaust flow is released via a first passage or conduit 56, the second exhaust flow is released via a second passage or conduit 58, and the third exhaust flow is released via a third passage or conduit 60. The exhaust conduit 54 may be considered to encompass the first passage or conduit 56, the second passage or conduit 58, and the third passage or conduit 60, though it should be noted that the first, second, and third passages or conduits may be separate passages, lines, or conduits, e.g. pipes, that are assembled together into the exhaust conduit 54. The exhaust conduit 54 also comprises the passage or conduit 53 configured to fluidly couple the fuel cell system to the exhaust fluid processing device 50.

In some examples, the at least one system 25 comprises two systems, each of the two systems comprising a corresponding fuel cell system and an exhaust assembly coupled to and in fluid communication with the fuel cell system. In such examples, the vehicle 10 includes two exhaust fluid processing devices 50, each being coupled to and in fluid communication with the corresponding exhaust conduit 54 of the exhaust assembly 52. Flows of exhaust fluids produced by each of the two fuel cell systems may be processed separately. Some or all of the resulting exhaust flows may be merged, or the vehicle 10 may be configured such that all of the flows, produced by the two fuel cell systems, are carried away from the exhaust assembly 52 separately. For example, dry vapor may be output separately by each of the exhaust fluid processing devices, i.e. the vehicle 10 will have two separate conduits for releasing dry vapor from under the vehicle. Similarly, the vehicle 10 may have two separate conduits for releasing liquid water from under the vehicle or in other words underneath the vehicle 10, and the vehicle 10 may have two separate conduits for carrying hydrogen upwards, to be released at the top of the cabin of the vehicle 10. In some examples, the conduits, configured to lead the hydrogen towards the top of the vehicle and then away from the vehicle, may be merged into a single conduit. In some examples, two or more conduits may be configured to lead the hydrogen towards the top of the vehicle and to release the hydrogen to the environment from the top of the vehicle.

The first conduit 56, configured to carry the first exhaust flow comprising liquid water, may be positioned so as to release the water from under the vehicle 10. If released directly into the environment, the liquid water is released from under the vehicle 10, i.e. an opening of the first conduit 56 is positioned under the vehicle, as shown in FIG. 1. In some examples, In some examples, the first conduit 56 is configured to fluidly couple to a fluid storage container such as e.g. a water tank configured to collect and store the liquid water. The first conduit 56 may be in fluid communication with the fluid storage container where the liquid water, discharged by the exhaust fluid processing device 50, may optionally be stored. The liquid water may be stored for later release e.g. upon a trigger event. In some examples, in addition or alternatively, the liquid water may be stored for reuse in the vehicle or outside the vehicle.

The second conduit 58 is configured to release dry vapor from underneath the vehicle 10 and an opening of the second conduit 58 is positioned underneath the vehicle 10, as also shown in FIG. 1. The third conduit 60, e.g., a pipe, is configured to release hydrogen from a top of the vehicle, such as from a top of a gantry or tower 12 of the vehicle 10. The gantry or tower 12, as used herein, refers to a compartment of a vehicle cab or cabin 15 behind a driver compartment 18. For example, in a trailer-tractor vehicle or in a semi-trailer-tractor vehicle, the cabin may be referred to as a truck tractor or a tractor, to which a trailer may be attached. The tower 12 includes various electrical and other components and can include the third conduit 60 which may be in the form of a thin pipe which may be vertical or it may have one or more bends. It should be noted that the position of the third conduit 60 is shown schematically in FIG. 1, as the third conduit 60 may be routed through the tower 12. The third conduit 60 may extend through at least a portion of the tower 12 of the vehicle, and a specific position of the third conduit 60 may depend on position of other components in the tower 12. The third conduit 60 may be positioned in the tower 12 such that a top of the third conduit 60, with an opening configured to release hydrogen to the ambient environment, protrudes from the top, such as a roof, of the tower 12.

The fuel cell system 20 is used for powering one or more electric drive motors (not shown in FIG. 1) which are used for creating a propulsion force to the vehicle 10. The fuel cell system 20 may additionally be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering one or more power take-off (PTO) devices, such that power can be transmitted from an electric motor of the vehicle 10 to another piece of equipment e.g. an attached implement or separate machine.

The fuel cell system 20 comprises two or more fuel cells which together form a fuel cell stack. The fuel cell system 20 is arranged to provide the fuel cells stack with necessary supply of hydrogen fuel (H₂) and air or oxygen, cooling, heating, etc., and the fuel cell system may include various components which are not shown herein. The fuel cell system 20 may comprise multiple fuel cell systems, and each fuel cell system may comprise its own control system, which may be communicatively connected to a controller or control unit. In some examples, the fuel cell system 20 includes two fuel cell systems. In some examples, the fuel cell system 20 comprises more than two fuel cell systems, such as three or more than three fuel cell systems.

The vehicle 10 also comprises an electrical storage system (ESS) 40 such as, for example, one or more batteries and/or one or more supercapacitors. The ESS 40 is rechargeable and is adapted and configured to store electrical energy, including excess electric energy produced by the fuel cell system 20. The ESS 40 may store energy regenerated during braking such as regenerative braking, and/or it may be configured for being charged by a charger, such as, e.g., from an external power grid or another source. The ESS 40 is configured to assist the fuel cell system in supplying energy to the electric drive motor, to meet power/energy demands of the vehicle 10. The ESS 40 may be configured to provide additional propulsive power in situations when the complete required power cannot be provided by the fuel cell system 20, or when it is not suitable to provide the complete required power by the fuel cell system 20. In various examples, the ESS 40 may provide electrical energy storage during regenerative braking, provide electrical energy storage device for electrical energy that is generated from a fuel cell system at low loads, assist the fuel cell system 20 with generating power at higher loads, or may serve as a main energy supplier in some circumstances. The fuel cell system 20 and the ESS 40 can provide power to one or more auxiliary systems of the vehicle 10. It should be appreciated that the vehicle may be powered using electrical energy from any combination of the fuel cell system 20 and the ESS 40.

The vehicle 10 may comprise a control device or controller 30 configured to control operation of the system 25, the fuel cell system 20, the ESS 40, and/or other components. The controller 30 may be an on-board controller, but it shall be understood that the controller 30 may also be a remote control device or system, e.g., an off-board control system or a combination of an on-board and off-board control system or systems. The controller 30 may be an electronic control unit or system that comprises processing circuitry which is adapted and configured to execute a computer program comprising computer-executable instructions, to perform a method according to aspects of the present disclosure. The controller 30 may comprise hardware, firmware, and/or software for performing the method according to aspects of the present disclosure. The controller 30 may be denoted a computer. The vehicle 10 may also comprise various other components not shown in FIG. 1.

Although the present disclosure is described with respect to a vehicle such as a truck, aspects of the present disclosure are not restricted to this particular vehicle, but may also be used in other vehicles such as passenger cars, off-road vehicles, aircrafts, and marine vehicles.

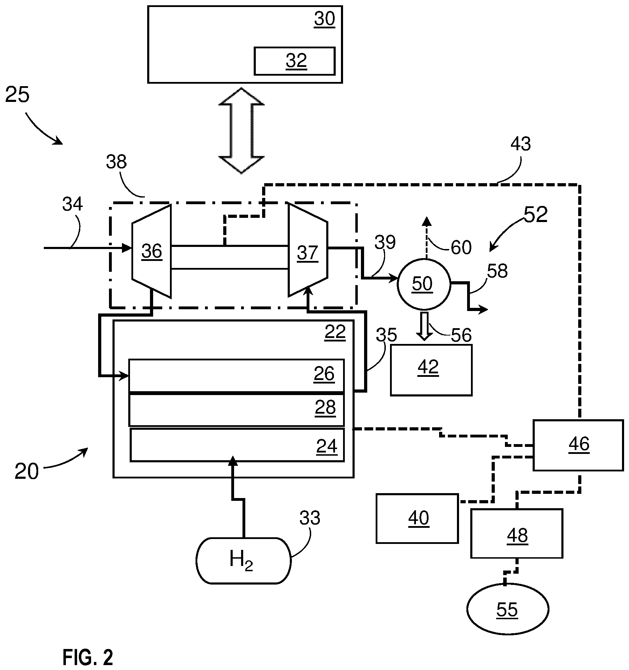

**FIG. 2** illustrates an example of a configuration of the vehicle 10 comprising the system 25 that comprises the fuel cell system 20 and the exhaust assembly 52, shown partially, in fluid communication with the fuel cell system 20. Operation of the system 25 may at least in part be controlled by the controller 30.

As shown in FIG. 2, the fuel cell system 20 comprises a fuel cell stack 22 comprising an anode or anode side 24, a cathode or cathode side 26, and an electrolyte 28 such as e.g. a proton exchange membrane (PEM) sandwiched between the anode 24 and cathode 26. The anode side 24 receives fuel such as hydrogen gas that may be supplied e.g. from a fuel storage container 33 or from another source. The cathode side 26 of the fuel cell stack 22 receives air from the ambient environment, as shown by line 34. The ambient air is pressurized e.g. by a compressor 36 before being delivered to the cathode 26 of the fuel cell stack 22. As shown in FIG. 2 by a dot-dashed line, an electrical turbocharger 38, also referred to as eTurbo, in communication with the fuel cell system 20, may comprise the compressor 36 and a turbine 37. The compressor 36 is configured to pressurize ambient air before the air is supplied to the cathode 26. The turbine 37 is configured to expand the exhaust fluid that is produced by the fuel cell stack 22 and is directed to the turbine 37, as shown by an arrow 35. The turbine 37 is configured to expand the flow of the exhaust fluid from the fuel cell stack 22, thereby extracting energy that in turn can drive the compressor 36 of the electrical turbocharger 38. The electrical turbocharger 38 is shown as an example, as other configurations are possible, as well as other devices or systems.

The exhaust assembly 52 comprises an exhaust fluid processing device 50 that is positioned in the exhaust assembly 52 so as to receive the exhaust fluid that has been pressurized by the turbocharger 38 and that is routed through the device 50. The turbine 37 is positioned upstream of the exhaust fluid processing device 50, wherein an upstream position as used herein refers to a position that is closer to the fuel cell system 20 e.g. an outlet of the fuel cell system 20 configured to output the exhaust fluid. A downstream position, as used herein, defines a position that is farther away from the fuel cell system 20, in a direction towards the outside, in which the fuel cell exhaust fluid is carried through the exhaust assembly 52 and ultimately away from the vehicle 10.

The exhaust fluid processing device 50 is configured to receive the exhaust fluid as shown by an arow 39, separate the exhaust fluid as it passes through the device 50 into three flows, and discharge the flows via corresponding separate outlets each coupled to and in fluid communication with a respective conduit. FIG. 2 illustrates that the exhaust fluid processing device 50 is configured to separate the exhaust fluid into three exhaust flows and release the exhaust flows via the first conduit 56 configured to carry liquid water away from device 50, the second conduit 58 configured to carry the dry vapor away from the device 50, and the third conduit 60 configured to carry hydrogen gas away from the device 50. The hydrogen carried away from the device 50 via the third conduit 60 may comprise hydrogen that was not used in the fuel cell stack and is released during normal operation of the fuel cell system. For example, hydrogen may be not completely removed from the fuel cell system as the fuel cell system is shut down, and the hydrogen remaining in the system may be released via the third conduit 60. In some cases, additionally or alternatively, the hydrogen carried in the third conduit 60 may be released during a malfunction in the fuel cell system, or by accident.

The liquid water can be released under the vehicle 10 and/or it may be collected and stored in a fluid storage container 42 shown in FIG. 2. The dry vapor can also be released from under the vehicle 10. The hydrogen gas can be released, via the third conduit 60, from a top of the vehicle 10 such as a top of the gantry or tower as shown in FIG. 1.

In the example of FIG. 2, the fuel cell system 20 is shown to output the exhaust fluid, shown by arrow 35 before or upstream of the electrical turbocharger 38 and arrow 39 after or downstream the electrical turbocharger 38. The exhaust fluid may be referred to as a main exhaust flow, which comprises byproducts discharged from both the anode side 24 and cathode side 26 of the fuel cell stack 22 that are combined into the single flow that is routed through the device 50. The anode side 24 and cathode side 26 can have respective separate exhaust conduits (not shown), and flows carried in the conduits may be combined into the main flow. In some examples, the separate exhaust conduits may carry respective exhaust fluid flows from the anode and cathode sides 24, 26 away from the fuel cell stack.

In some examples, the exhaust fluid may be expelled from the exhaust conduit 38 directly on the ground. In some examples, as shown in FIG. 2, the exhaust fluid may optionally be collected and stored in the fluid storage container 42 such as e.g. a water tank. The exhaust fluid stored in the fluid storage container 42 may be released upon a trigger, e.g., responsive to stopping the vehicle 10 and/or shutting down or preparing to shut down the fuel cell system 20.

In some examples, the liquid water collected and stored in the fluid storage container 42 may be reused in the vehicle 10, for example, for one or more out of cooling needs, delivering water to a fuel cell humidifier, vehicle washing, etc.

In the example of FIG. 2, electric power, labeled as 43, generated by the fuel cell stack 22 may be supplied to a junction box or unit 46, such as e.g. a high-voltage junction box. The power may be supplied to the junction unit 46 e.g. through a converter. The power is supplied, via the junction unit 46, to an electric motor or machine 48, also referred to herein as an electric traction machine, for propelling one or more sets of wheels 55 of the vehicle. The junction unit 46 is a component that serves as a communal meeting spot for electrical connections between the fuel cell stack 22, the ESS 40, and the electric machine 48. Traction power to the wheels 55 is delivered by the electric machine 48 supplied by one or both the ESS 40, such as e.g. a battery system comprising one or more batteries, and the fuel cell stack 22. Electrical connections are shown by dotted lines in FIG. 2.

Operation of the system 25 may be controlled at least in part by a control device such as controller 30 also shown in FIG. 1. The controller 30 comprises processing circuitry 32 and memory (not shown) storing computer-executable instructions that, when executed by the processing circuitry 32, perform a method for handling a fuel cell system fluid, in accordance with examples of the present disclosure. The method may comprise routing the fuel cell exhaust fluid produced by the fuel cell system of the fuel cell vehicle 10 to and through the exhaust assembly comprising the exhaust conduit and the exhaust fluid processing device 50 such that three separate flows are output from the exhaust fluid processing device 50 and carried away from the device 50 via respective passages or conduits together forming the exhaust conduit 54 of the exhaust assembly 52. The method may comprise routing the fuel cell exhaust fluid to and through the exhaust fluid processing device 50, such that three separate flows are output from the exhaust fluid processing device 50 and carried away from the device 50 via respective passages or conduits of the exhaust conduit 54.

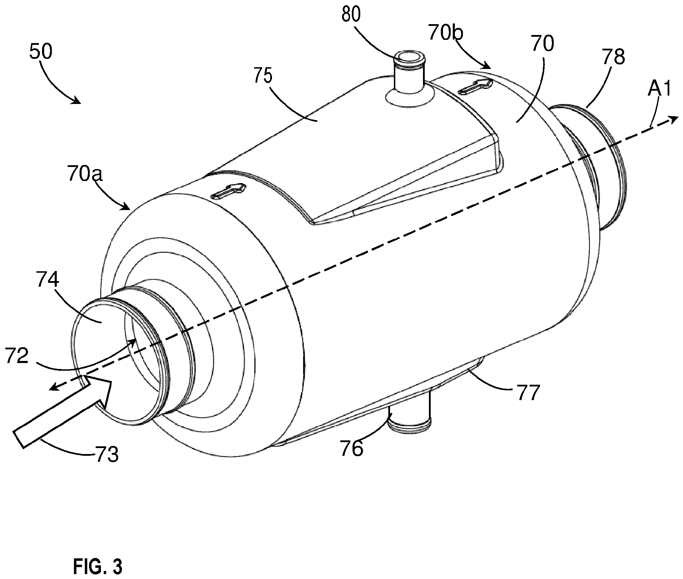

**FIG. 3** illustrates an example of the exhaust fluid processing device 50 that comprises a housing 70 having a first end 70a and a second, opposite end 70b. In FIG. 3, the exhaust fluid processing device 50 is shown in an orientation, relative to the gravity, in which it may be positioned in a fuel cell vehicle such as e.g. the vehicle 10. The housing 70 has a longitudinal axis A1 extending between the first and second ends 70a, 70b. The housing 70 encompasses a chamber 72 that is not visible in FIG. 3 and is denoted by an arrow 72. The housing 70 comprises an inlet port 74 configured to receive the fuel cell exhaust fluid as shown schematically by an arrow 73, a first outlet port 76, a second outlet port 78, and a third outlet port 80. The first inlet port 74 may be positioned closer to the first end 70a of the housing 70, and the first, second, and third outlet ports 76, 78, 80 may be positioned closer to the second end 70b of the housing 70. The inlet port 74 and the second outlet port 78 may be positioned along the longitudinal axis A1 of the housing, as shown in FIG. 3. In some examples, one or both the inlet port 74 and the second outlet port 78 may be offset from the longitudinal axis A1. The first outlet port 76 may be positioned at a bottom of the housing 70 and the third outlet port 80 may be positioned at a top of the housing 70, as shown in FIG. 3.

In the example of FIG. 3, the housing 70 is generally cylindrical, though it deviates from an exact cylindrical shape. The housing 70 may have another shape. As shown in FIG. 3, the housing may include an upper expansion 75 having the third outlet port 80 and a lower expansion 77 having the first outlet port 76. The upper and lower expansions 75, 77 form respective upper and lower compartments 75i, 77i of the chamber 72, as discussed in more detail below. The upper and lower expansions 75, 77 are configured to accumulate hydrogen gas and liquid water, respectively.

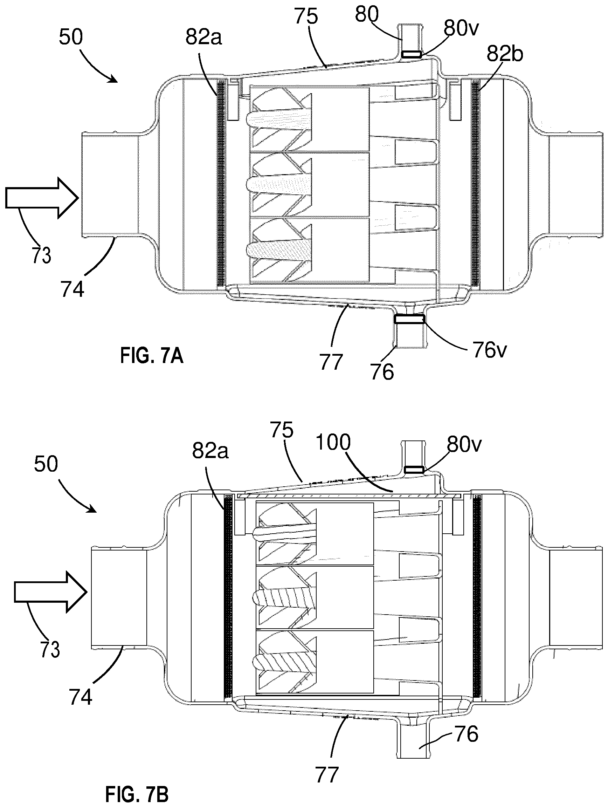

The first, second, and third outlet ports 76, 78, 80 may be in the form of flanges extending from an outer wall of the housing 70, around respective openings in the wall of the housing 70, for fluid communication with the chamber 72. In some implementations, as discussed below and shown in FIG. 7A, the first outlet port 76 may comprise a first valve 76v, and the third outlet port 80 may comprise a second valve 80v. In some examples, the first valve 76v may be configured and/or controlled to selectively allow the liquid water to pass through first outlet port 76 and away from the exhaust fluid processing device. In some examples, the second valve 80v may be configured and/or controlled to allow the hydrogen gas to pass therethrough and away from the exhaust fluid processing device 50, and the second valve may be configured to release overpressure in the exhaust fluid processing device 50.

The first, second, and third outlet ports 76, 78, 80 may be configured to mate or couple with corresponding first, second, and third passages or conduits 56, 58, 60 shown in FIGs. 1 and 2, such that each of the conduits conveys a fuel cell exhaust fluid from a corresponding outlet port away from the exhaust fluid processing device 50. Thus, the first outlet port 76 may be configured to couple with the first conduit 56, the second outlet port 78 may be configured to couple with the second conduit 58, and the third outlet port 80 may be configured to couple with the third conduit 60. In some examples, the first outlet port 76 and/or first conduit 56 may be configured to fluidly couple to a fluid storage container e.g. fluid storage container 42 (FIG. 2) which may be a water tank configured to collect and store the liquid water.

The pressure from a compressor, e.g., a turbocharger compressor of electrical turbocharger 38 (FIG. 2), drives the flow of the fuel cell exhaust fluid through the exhaust fluid processing device 50 at a velocity that ensures that the device 50 is able to perform its function of processing and handling the fuel cell exhaust fluid. The exhaust fluid processing device 50 is configured such that pressure inside the housing 70, created by e.g. electrical turbocharger 38 (FIG. 2) is maintained. The exhaust fluid processing device 50 is configured to retain as much as pressure is possible inside the device 50.

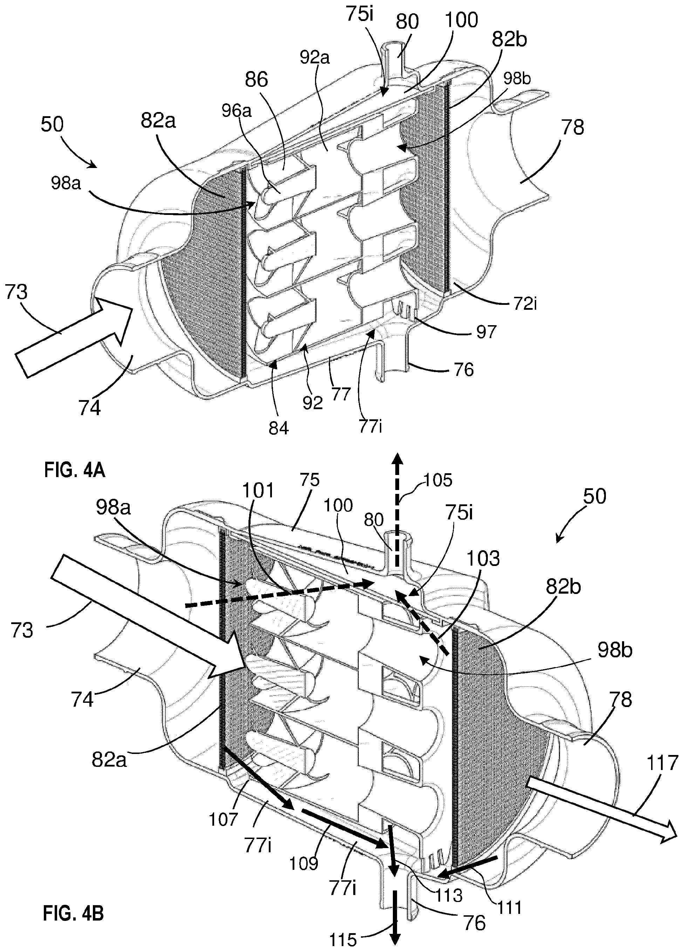

As shown in **FIGs. 4A** and **4B****,** the housing 70 may comprise, positioned in the chamber 72, at least one demister 82 and a centrifugal separator 84. The at least one demister 82, shown as a first and second demisters 82a, 82b in FIGs. 4A and 4B, is positioned downstream of the inlet port 74 and has a shape that conforms to a shape of an inner wall 72i of the chamber 72. The at least one demister 82 may be positioned against the inner wall 72i of the chamber 72 in the portion of the housing 70 that does not form the upper and lower expansion expansions 75, 77. In some examples, the exhaust fluid processing device 50 may not include a demister, as discussed in more detail below.

The at least one demister 82 is configured to have the fuel cell exhaust fluid pass therethrough to cause at least a portion of vapor in the fuel cell exhaust fluid to be converted into water droplets, whereby liquid water is extracted from the fuel cell exhaust fluid. The demister 82 is configured such that water droplets in the exhaust fluid, e.g., a steam phase of the exhaust fluid, are brought together to form larger water droplets. Finer or smaller droplets condense, collide, and coalesce into larger and larger droplets that can thereby ultimately become part of the liquid phase of the exhaust fluid. Also, the demister 82 is configured to make a more laminar flow of the fuel cell exhaust fluid, which makes it easier for hydrogen gas to the leave the main exhaust flow. After the demister, turbulence of the exhaust fluid is reduced e.g. minimized, whereby mixing of hydrogen gas with the liquid and vapor phases of the exhaust flow is reduced, and the hydrogen gas separates from the fuel cell exhaust fluid and rises upwards.

The centrifugal separator 84 comprises at least one swirler 86 and it is configured to have the fuel cell exhaust fluid to pass therethrough so that the fuel cell exhaust fluid passing through the centrifugal separator 84 is separated into the liquid water, the hydrogen gas, and a dry vapor or steam also referred to herein as a dry exhaust vapor. The first outlet port 76 is configured to allow the liquid water to exit the housing 70, the second outlet port 78 is configured to allow the dry exhaust vapor to exit the housing 70, and the third outlet port 80 is configured to allow the hydrogen gas to exit the housing 70.

The at least one demister 82 may be vapor-liquid separation structure configured to retain liquid water droplets from a vapor phase of the fluid cell exhaust fluid. The first and second demisters 82a, 82b may be positioned such that their surfaces span an inner space of the housing 70 such that the entirety of the fuel cell exhaust fluid is directed through the demisters. The demister may be positioned such that its surface may be in a plane that extends transversely to the longitudinal axis A1 of the housing 70. In some examples, the surface of the demister may be positioned in a plane that is angled, e.g. up to 30 degrees, relative to the plane extending transversely to the longitudinal axis A1 of the housing 70. The at least one demister 82 may have any suitable configuration and/or structure. In some examples, the demister may be pleated wherein the pleated material may have a zigzag structure, which creates a larger surface of the demister. The first and second demisters 82a, 82b may be of the same or similar types. In some examples, the first and second demisters 82a, 82b may have respective different configurations. The demisters may be formed of a nylon thread mesh, polyester fibers, polyethylene fibers, polypropylene (polystyrene), and/or any other suitable materials or combinations of the materials. In some examples, the one or more demisters employed in the exhaust fluid processing device may have filter properties.

Each of the demisters 82a, 82b is adjacent to or abuts the inner wall 72i of the chamber 72 such that the demister covers the entire flow area within the chamber 72. The inner wall 72i of the chamber 72 of the housing 70 may be generally cylindrical such that its cross-section, which lies in a plane that is transverse (or perpendicular) to the longitudinal axis A1 of the housing 70, may be generally circular, oval, or have another rounded or cylindrical shape. The at least one demister 82, e.g. each of the first and second demisters 82a, 82b, may also be generally circular, oval, or it may have another rounded or cylindrical shape, in the cross-section that lies in a plane that is perpendicular or angled relative to the longitudinal axis A1 of the housing 70.

The housing 70 may have various shapes. The at least one demister 82 may be shaped and sized to fit tightly within the inner wall 72i of the housing 70. The inner wall 72i may also include features that are configured to retain the demister 82 within the housing 70 and that ensure proper positioning of the demister 82 in the housing 70. The demister 82 may be removable and replaceable, and it may be removably attached to the inner wall 72i of the housing 70. In some examples, the housing 70 may be configured such that a part of it is removable to gain access to the inside of the housing 70, e.g. for replacement of the at least one demister 82 and/or for other maintenance needs. For example, the housing 70 may be configured to comprise a casing or base, and a cover that may be separated from the causing or base, opened or otherwise moved to allow access to the housing 70. With the base and the cover mated, attached, or coupled to one another, the housing 70 may have a configuration as shown in FIGs. 4A and 4B or another suitable configuration.

In some examples, the entire exhaust fluid processing device 50 may be removable and replaceable. Thus, in some examples, for repair or for other reasons, the exhaust fluid processing device 50 may be disconnected from the exhaust conduit 54 and replaced with a new and/or replacement exhaust fluid processing device which may be coupled to the exhaust conduit 54. In some examples, the at least one demister 82 may be removable and replaceable, and the entire exhaust fluid processing device 50 may be removable and replaceable.

The first demister 82a, positioned upstream of the centrifugal separator 84, is configured to receive the so-called "raw" or unprocessed fuel cell exhaust fluid that enters the housing 72 through the inlet port 74 from the fuel cell system of the vehicle, e.g. via passage or conduit 53 of the exhaust conduit 54 as shown in FIG. 1. The fuel cell exhaust fluid is pressurized and is driven through the exhaust fluid processing device 50.

The second demister 82b may be positioned downstream of the centrifugal separator 84 and is configured to receive the fuel cell exhaust fluid that has passed through the centrifugal separator 84. The fuel cell exhaust fluid which has passed through the centrifugal separator 84 may include less liquid water and less hydrogen than the raw fuel cell exhaust fluid, and may include mainly dry steam or vapor. The exhaust fluid, which has passed through the first demister 82a and the centrifugal separator 84, may be further dried by further extracting liquid water from the exhaust fluid as the exhaust fluid passes through the second demister 82b. In some cases, as shown below, only one demister may be included in the housing 70. The use of two demisters, placed respectively before and after the separator 84, may allow producing a drier vapor that is expelled from the vehicle. Furthermore, in some examples, the device 50 may not include a demister.

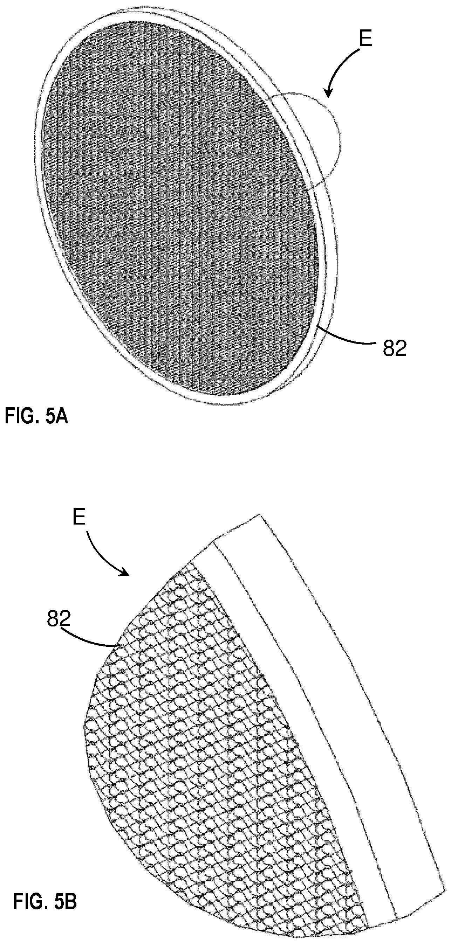

As shown in **FIG. 5A** illustrating an example of demister 82, the demister 82 may be generally circular or rounded. An enlarged section E of the demister 82, marked in FIG. 5A, is shown in FIG. 5B which illustrates that the demister 82 may be in the form of a mesh or net, e.g., woven or non-woven mesh. The mesh may be, for example, a wire mesh. In some examples, the demister may be formed of one or more layers of a mesh forming a mesh pad. In some examples, the demister is formed of a woven or non-woven mesh. In some examples, the woven or non-woven mesh may have a thread size of approximately 0.15 mm, though other thread sizes may be used.

In some examples, the demister may comprise a pleated net with guiding canals or channels at a bottom of the pleated net, to lead liquid water out of the demister. A configuration of the pleated net demister may depend on a pressure drop allowed for the demister and/or on other factors.

In some examples, the at least one demister 82 comprises a front surface and a back surface, and a plurality of guiding channels extending between the front and back surfaces, wherein the at least one demister 82 is positioned in the chamber 72 such that the front surface receives the fuel cell exhaust fluid that passes through the demister 82 and exits the demister 82 at the back surface. In some examples, the at least one demister 82 may be reversible such that both of its front and back surfaces may be positioned to receive the exhaust fluid for it to pass through the demister.

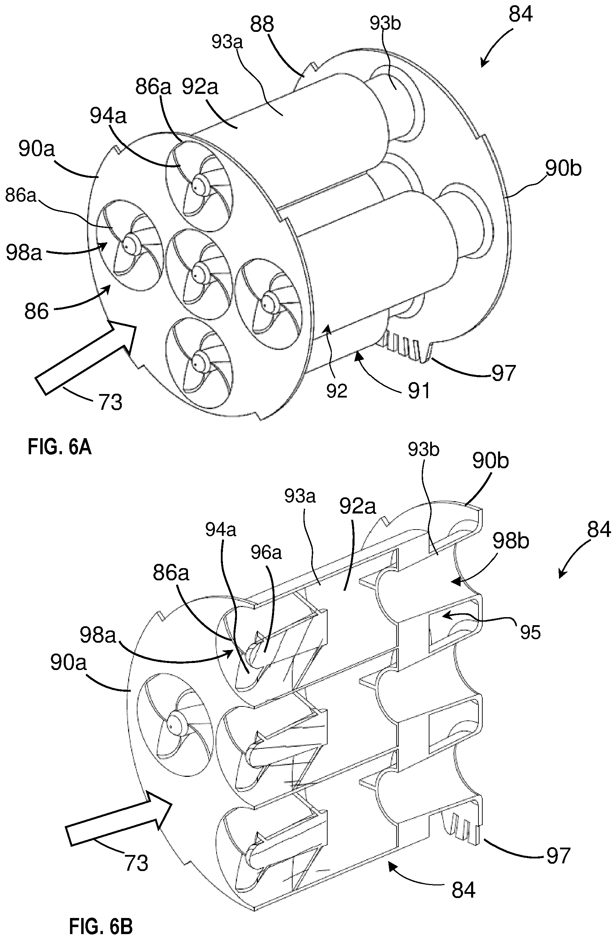

The centrifugal separator 84, shown in FIGs. 4A and 4B, and separately in FIGs. 6A and 6B, comprises at least one swirler 86, such as multiple swirlers. In this example, as shown in more detail in FIGs. 6A and 6B, the at least one swirler 86 comprises five swirlers disposed in corresponding swirler pipes. It should be noted that the centrifugal separator 84 may have any suitable number of swirlers, e.g., two, three, four, five, six, or more than six, as examples of the present disclosure are not limited to any specific number of swirlers of the centrifugal separator.

As shown in FIGs. 6A and 6B, the centrifugal separator 84 comprises a generally cylindrical body 88 having first and second end plates 90a, 90b and an intermediary structure 91 extending between the first and second end plates 90a, 90b. In some examples, the centrifugal separator 84 is positioned along the longitudinal axis A1 of the exhaust fluid processing device 50, and a diameter of the separator's outer boundary may be equal or approximately equal to a diameter of the at least one demister 82.

When the separator 84 is positioned in the chamber 72, the upper compartment 75i may be formed in the chamber 72, within the inner wall of the upper expansion 75 of the housing 70. The lower compartment 77i may be formed within the inner wall of the lower expansion 77.

The upper compartment 75i may be configured to receive hydrogen gas separated from the fuel cell exhaust fluid in the exhaust fluid processing device 50, wherein the hydrogen gas exits the chamber 72 through the third outlet port 80. In some examples, an overpressure in the device 50 may be released through the third outlet port 80.

In some implementations, as shown in FIGs. 4A and 4B, and is also shown in FIG. 7B, the exhaust fluid processing device 50 may comprise a membrane 100 which may be positioned below the third outlet port 80 and above the centrifugal separator 84, along at least a portion of a length of the centrifugal separator 84. The membrane 100 may be configured to pass hydrogen gas therethrough and towards the third outlet port 80. The membrane 100 may be in the form of a layer that is positioned over at least a portion of the centrifugal separator 84, such that the membrane 100 separates the upper compartment 75i from the rest of the interior of the housing 70. In some examples, the membrane 100 may be a membrane that allows only the hydrogen gas to pass through the membrane 100, such that the membrane 100 is not permeable to vapor and gases other than hydrogen. In some examples, the membrane 100 may allow the hydrogen gas, as well as other gases and vapor to pass through.

The membrane 100 may be made from any suitable material or a combination of materials. For example, in some implementations, the membrane 100 may be a polymer membrane, a silica membrane, a carbon-based membrane, a metallic membrane, or any other type of a membrane.

The lower compartment 77i may be configured to receive liquid water separated from the exhaust fluid in the exhaust fluid processing device 50, wherein the liquid water exits the chamber 72 through the first outlet port 76.

The intermediary structure 91 of the centrifugal separator 84 comprises swirler pipes 92 each enclosing a corresponding swirler, the swirler pipes extending through the entire length of the separator 84 such that opposed ends of each pipe open through walls of the first and second end plates 90a, 90b, respectively, as shown in FIGs. 6A and 6B. The swirler pipes 92 may be coupled to one another. Each pipe of the pipes 92 may comprise a first pipe portion and a second pipe portion having a smaller diameter or surface area than a diameter or surface area of the first pipe portion. The second pipe portion may be partially inserted into the first pipe portion such that a gap is formed in the pipe between the first and second pipe portions. For examples, as shown for a representative swirler pipe 92a in FIG. 6B, the pipe 92a comprises a first pipe portion 93a and a second pipe portion 93b partially inserted into the first pipe portion 93a, with a gap 95 being formed between the first and second pipe portions 93a, 93b. The liquid water, including liquid water separated from the steam or vapor in the fuel cell exhaust fluid produced by the fuel cell system, flows in the gravity direction, downwards, through the gap 95 and into the lower compartment 77i and towards the first outlet port 76. As shown in FIGs. 4A, 4B, and 6B, the swirler pipe 92a has a first, entry end 98a formed in the first pipe portion 93a, and a second, exit end 98b formed in the second pipe portion 93b. The first end 98a is configured to receive the exhaust fluid and the second end 98b is configured to output the dry vapor separated from the liquid water.

Each of the pipes 92 comprises, in its first pipe portion, a swirler. For example, as illustrated in FIGs. 6A and 6B for one of the swirlers 86 as a representative of the swirlers 86, a swirler 86a, it is enclosed in the corresponding swirler pipe 92a. The swirler 86a is a static component that is positioned so as to create swirl in the fuel cell exhaust fluid as the fuel cell exhaust fluid is passing through the swirler pipe 92a and encounters the swirler 86a. The pressurized flow or stream of the fuel cell exhaust fluid enters the swirl pipes of the separator 84 as shown by the arrow 73 in FIGs. 6A and 6B. The flow or stream experiences a centrifugal force, which causes separation of the flow of the fuel cell exhaust fluid.

The swirler 86a may comprise inclined blades 94a mounted circumferentially around on a swirler base or shaft 96a that extends along a longitudinal axis of the first pipe portion 93a which may coincide with a longitudinal axis of the swirler pipe 92a. The shaft 96a of the swirler 86a, with the blades 94 formed thereon, is visible in FIGs. 4A, 4B, and 6B at which the separator 84 is shown in cross-section. The swirler 86a is shown in this example to include three blades 94a; and other four of the swirlers 86 may have the same structure. It should be appreciated however that a swirler in the separator 84 can have another number of blades, e.g., more than three blades. Also, any suitable number of swirler pipes may be included in the separator.

As shown, the shaft 96a is formed through a portion of the first pipe portion 93a of the swirler pipe 92a, such that the shaft 96a and the blades 94a are positioned in proximity to the first end 98a of the pipe 92a. The swirler 86s is positioned at the entrance of the swirler pipe 92a such that the flow of the fuel cell exhaust fluid entering the swirler pipe 92a encounters the swirler 86a. A portion of the interior of the swirler pipe 92a may be free of the shaft 96a and is hollow, as shown in FIGs. 4A, 4B and 6B.

In some examples, as illustrated herein, the second end plate 90b may comprise a guide element 97 in the form of downward facing, i.e. in the direction of gravity, protrusions, such that the guide 96 resembles a downward facing comb. The guide element 97 is configured to assist in guiding the water extracted from the fuel cell exhaust fluid towards the first outlet port 76. The guide element 97 is an optional structure which may not be present in some implementations. In some examples, other elements may be used to assist in guiding the water extracted from the fuel cell exhaust fluid towards the first outlet port 76.

FIG. 4B illustrates schematically an example of flows of liquid water, hydrogen, and dry vapor, created as the pressurized flow of the fuel cell exhaust fluid passes through the exhaust fluid processing device 50. The fuel cell exhaust flow, which is a mixture of liquid water, water vapor, hydrogen gas, and certain amounts of other gases such as e.g. nitrogen and oxygen, is separated such that the liquid water flows downwards in the direction of gravity and is released from the housing 70 of the device 50 via the first outlet port 76. The dry vapor, which remains in the exhaust flow after the liquid water is extracted from the exhaust fluid and the hydrogen flows upwards, is released separately via the second outlet port 78. The hydrogen exist the housing 70 via the third outlet port 80.

In FIG. 4B, dashed arrows 101, 103, and 105 illustrate schematically paths which may be taken by hydrogen through the exhaust fluid processing device 50, from the inlet port 74 and towards and out of the third outlet port 80. Thus, as the pressurized flow 73 of the fuel cell exhaust fluid is routed to enter the housing 70 and passes through the first demister 82a, if the demister is present, the hydrogen flows upwards, as shown by the arrow 101. Hydrogen is also separated from the fuel cell exhaust flow as the exhaust flow passes through the separator 84, as shown by the arrow 103. Hydrogen has a highest average velocity among known gases, and it rises upwards as fast as 20 m/s (meters per second). Thus, as soon as hydrogen is separated from the fuel cell exhaust fluid, it quickly rises upwards.

The hydrogen flows to the upper compartment 75i that comprises the third outlet port 80. As discussed above, a membrane may be positioned in the chamber 72 to delineate the bottom of the upper compartment 75i, the membrane being permeable to hydrogen. The hydrogen exits the housing 70 through the third outlet port 80, as shown by the arrow 105.

In some examples, as shown in FIG. 7A, the third outlet port 80 optionally comprises the second valve 80v configured and/or controlled to allow the hydrogen gas to pass therethrough and away from the exhaust fluid processing device (50), wherein the second valve (80v) is configured to release overpressure in the exhaust fluid processing device (50). In some circumstances, the pressure in the chamber 72 may become excessively high, thereby creating a so-called overpressure in the chamber 72. For example, when the fuel cell system is operated at a high load, the pressure applied to the fuel cell exhaust fluid may be high such that overpressure occurs in the chamber 72. The second valve 80v, positioned in the third outlet port 80, may be e.g. a spring valve or another type of valve. In some examples, the second valve 80v may be configured to release overpressure in the chamber 72, which release may be performed upon a trigger such as in response to detecting a certain condition. For example, responsive to detecting, e.g., by the controller 30, that the pressure in the chamber 72 is above a certain pressure threshold, the second valve 80v may at least partially open to thereby allow the pressure in the chamber 72 be reduced. The second valve 80v may close after being open, which may be controllable or automatic. One or more pressure sensors (not shown) may be associated with the device 50, to monitor the pressure in the chamber 72 and to detect when the pressure becomes to be above the pressure threshold. In some examples, the second valve 80v may be configured to change its configuration, to release the overpressure, in response to an increase of the pressure in the chamber 72, without a use of a pressure sensor.

In some examples, the second valve 80v, controlling passage of fluids through the third outlet port 80, may be configured to continuously allow the hydrogen gas to pass therethrough, e.g. regardless of a configuration of the second valve 80v, such as regardless of whether or not the second valve 80v is releasing the overpressure in the exhaust fluid processing device. Thus, in some examples, the second valve 80v may be configured such that the hydrogen gas is allowed to continuously pass freely therethrough, such that e.g. there are one or more openings and/or membranes in the valve 80v for hydrogen to pass. At the same time, the second valve 80v may be configured such that, even when it allows the hydrogen gas to pass therethrough, the second valve 80v needs to be opened to a larger degree for it to release the overpressure that may accumulate in the exhaust fluid processing device 50.

The second valve 80v may be controllable, e.g., by controller 30 (FIGs. 1 and 2), to selectively release overpressure that may be accumulated in the housing 70.

In some examples, e.g. when the second valve 80v for controlling release of fluids through the third outlet port 80 and the membrane 100 are present, as shown in FIG. 7B, the membrane 100 may be configured to allow hydrogen gas, as well as vapor or steam to pass therethrough. The second valve 80v may be configured to release or reduce, e.g. to controllably release or reduce, the overpressure in the chamber 72 of the housing 70 of the device 50. It should be noted that various implementations of the device 50 are possible, with the membrane 100 present or absent, and/or with one or both first valve 76v and the second valve 80v being present or absent.

Solid black arrows 107, 109, 111, 113, and 115 in FIG. 4B illustrate schematically paths of flow of liquid water through the exhaust fluid processing device 50, from the inlet port 74 and towards and out from the first outlet port 76. The exhaust fluid processing device 50 is configured so that as much as possible of the liquid water is extracted from the exhaust fluid, e.g., up to 90-95% in some cases. At least a portion of the fuel cell exhaust fluid comprises water vapor. As the flow of the fuel cell exhaust fluid encounters the first demister 82a and passes through the first demister 82a, at least a portion of the vapor is condensed into a liquid phase, and the liquid water flows into the lower compartment 77i, as shown by the arrows 107 and 109. Water also flows to the lower compartment 77i from the separator 84, e.g. through gaps in each of the swirler pipes, as shown by the arrow 113. Also, the fuel cell exhaust fluid, passed through the first demister 82a and the separator 84, may further pass through the second demister 82b, such that the exhaust fluid becomes even drier as more water is extracted therefrom by the second demister 82b, as shown by the arrow 111. The lower compartment 77i may be configured such that its walls are slanted in the direction of gravity and towards an opening of the first outlet port 76, and the first outlet port 76 may be located at the lowermost point of the lower compartment 77i . Thus, the liquid water, also referred to as water, which flows into the lower compartment 77i as a result of handling the exhaust flow in the device 50, drains naturally out of the first outlet port 76, as shown by the arrow 115. A valve, such as e.g. first valve 76v, may be used to control the flow of the water through the first outlet port 76.

In examples in which only one demister is present the flow of water will follow paths from the demister and from the separator 84. In examples in which a demister not present, i.e. the housing does not include a demister, liquid water will flow from the separator 84 and downwards towards the first outlet port 76.

In some examples, as shown in FIG. 7A, the first outlet port 76 optionally comprises the first valve 76v configured and/or controlled to selectively allow the liquid water to pass through first outlet port 76 and away from the exhaust fluid processing device 50. The first valve 76v valve is configured to retain pressure in the chamber 72. The first valve 76v valve may be controllable, e.g., by the controller 30 (FIGs. 1 and 2), to release the liquid water. For example, in some examples, responsive to the vehicle stopping, the controller 30 may control the first valve 76v to open to thereby arrow the liquid water releasing from the lower compartment 77i via the first outlet port 76. As an example, when the vehicle is keyed-off, or upon another trigger, the first valve 76v may be controlled to operate to release the water through the first outlet port 76. As another example, in addition or alternatively, prior to or at shutting down the fuel cell system, the controller 30 may control the first valve 76v to open to thereby arrow the liquid water releasing from the lower compartment 77i via the first outlet port 76. The first valve 76v may be e.g. a proportional valve, an on-off valve, or valve of another type. The liquid water may be discharged via the first outlet port 76 to the outside or it may be collected in a fluid storage container of the vehicle.

A flow of the fluid that remains in the fuel cell exhaust fluid after it has been routed through the device 50 may include mainly dry vapor, in some cases with small amounts of moisture and gases, and the dry vapor is released from the housing 70 through the second outlet port 78 as shown by the white arrow 117 in FIG. 4B. The dry vapor or steam is routed under the vehicle and released to the outside from under the vehicle, like in conventional diesel and gasoline vehicles. Accordingly, fewer modifications to existing vehicle designs will need to be made to accommodate for release of the vapor as a byproduct of operation of the fuel cell system of the fuel cell system vehicle.

The release of the vapor or steam from under the vehicle is advantageous as compared to releasing the vapor or steam from the top of the vehicle. The vapor typically looks like a white fog, and may obscure visibility of the driver of the vehicle and visibility of drivers of other vehicles on the road. Thus, releasing the vapor from under the vehicle eliminates this issue. As another advantage, the dry vapor expelled by the exhaust fluid processing device 50 in accordance with examples of the present disclose includes no or little hydrogen. The release of hydrogen gas from the top of the vehicle, separately from the vapor, is advantageous because the risk of the hydrogen rising up through the vehicle in an uncontrolled manner is reduced or eliminated.

Furthermore, overall, the exhaust fluid processing device 50 allows processing the fuel cell exhaust fluid in a straightforward and efficient manner, such that the relatively simple device allows carrying the processed exhaust away from the fuel cell system and then away from the vehicle via three separate flows.

FIGs. 7A and 7B, mentioned above, additionally illustrate the exhaust fluid processing device 50 in a side cross-section. The description of the device 50 in connection with FIGs. 3, 4A, 4B, 5A, 5B, 6A, and 6B applies to the device 50 as shown in FIGs. 7A and 7B, and the description is therefore not repeated in conjunction with FIGs. 7A and 7B. FIG. 7A illustrates that the device 50 may comprise the first valve 76v in the first outlet port 76 and the second valve 80v in the third outlet port 80. It should be appreciated that, depending on a configuration of the fluid processing device 50, both of the first and second valves 76v, 80v may be present, or only one of the first and second valves 76v, 80v may be present, or neither of the first and second valves 76v, 80v may be present.

FIG. 7B illustrates, as discussed above, that the exhaust fluid processing device 50 may comprise the membrane 100 positioned below the third outlet port 80 and above the centrifugal separator 84, along at least a portion of a length of the centrifugal separator 84, the membrane 100 being configured to pass the hydrogen gas therethrough and towards the third outlet port 80. In some examples, the membrane 100 may be configured to selectively pass hydrogen gas therethrough. In some examples, the membrane 100 may be configured to pass the hydrogen gas and vapor therethrough. FIG. 7B also illustrates that the device 50 may comprise the second valve 80v in the third outlet port 80. The first valve 76v in the first outlet port 76 is not shown in the example of FIG. 7B, but it may be present in some implementations.

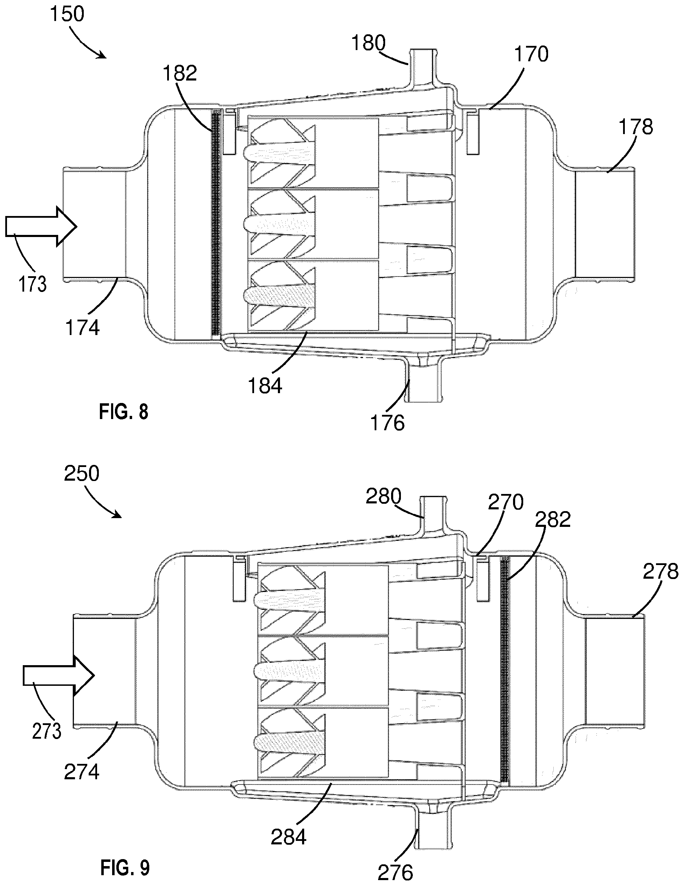

As discussed above, an exhaust fluid processing device in accordance with the present disclosure may have one demister, positioned before or after a centrifugal separator. Examples of such devices are shown in FIGs. 8 and 9.

**FIG. 8** illustrates an example of a side cross-section of an exhaust fluid processing device 150 that includes one demister 182 positioned in a housing 170 of the device 150 before, i.e. upstream, a centrifugal separator 184. A fuel cell exhaust fluid is routed through the exhaust fluid processing device 150 such that the flow of the fuel cell exhaust fluid enters the housing 170 via an inlet port 174 as shown by an arrow 173, is separated inside the exhaust fluid processing device 150 into three flows or streams, and exits the housing 170 through a first outlet port 176 configured to release liquid water from the housing 170, a second outlet port 178 configured to release dry vapor from the housing 170, and a third outlet port 180 configured to release hydrogen from the housing 170.

The exhaust fluid processing device 150 shown in FIG. 8 may be similar to the exhaust fluid processing device 50 described in connection with FIGs. 3, 4A, 4B, 5A, 5B, 6A, and 6B. The description of the components of the exhaust fluid processing device 50 applies to corresponding similar components of the exhaust fluid processing device 150 of FIG. 8 and is therefore not repeated herein, and the components are not labeled in FIG. 8.

**FIG. 9** illustrates an example of a side cross-section of an exhaust fluid processing device 250 that includes one demister 282 positioned in a housing 270 of the device 250 after, i.e. downstream, a centrifugal separator 284. A fuel cell exhaust fluid is routed through the exhaust fluid processing device 250 such that the flow of the exhaust fluid enters the housing 270 via an inlet port 274 as shown by an arrow 273, is separated inside the exhaust fluid processing device 250 into three flows or streams, and exits the housing 270 through a first outlet port 276 configured to release liquid water from the housing 270, a second outlet port 278 configured to release dry vapor from the housing 270, and a third outlet port 280 configured to release hydrogen from the housing 270.

The exhaust fluid processing device 250 shown in FIG. 9 may be similar to the exhaust fluid processing device 50 described in connection with FIGs. 3, 4A, 4B, 5A, 5B, 6A, and 6B. The description of the components of the exhaust fluid processing device 50 applies to corresponding similar components of the exhaust fluid processing device 250 of FIG. 9 and is therefore not repeated herein, and the components are not labeled in FIG. 9.

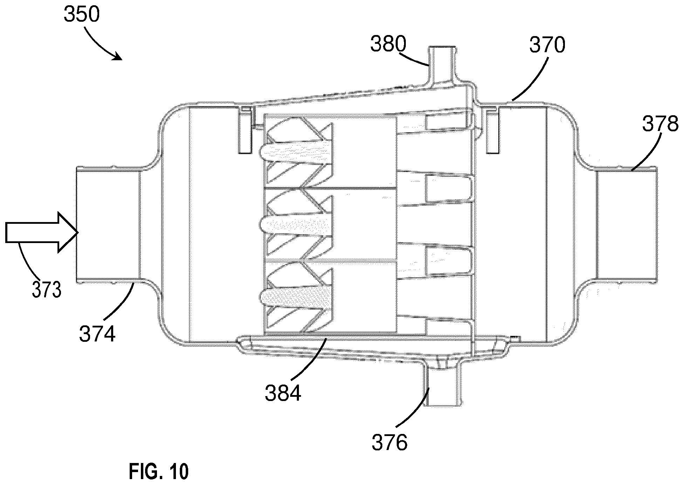

As discussed above, an exhaust fluid processing device in accordance with the present disclosure may have no demisters, and **FIG. 10** illustrates an example of such a device. FIG. 10 illustrates an example of a side cross-section of an exhaust fluid processing device 350 comprising a housing 370 that encompasses a centrifugal separator 384. A fuel cell exhaust fluid is routed through the exhaust fluid processing device 350 such that the flow of the exhaust fluid enters the housing 370 via an inlet port 374 as shown by an arrow 373, is separated inside the exhaust fluid processing device 350 into three flows or streams, and exits the housing 370 through a first outlet port 376 configured to release liquid water from the housing 370, a second outlet port 378 configured to release dry vapor from the housing 370, and a third outlet port 380 configured to release hydrogen from the housing 370.

The exhaust fluid processing device 350 shown in FIG. 10 may be similar to the exhaust fluid processing device 50 described in connection with FIGs. 3, 4A, 4B, 5A, 5B, 6A, and 6B. The description of the components of the exhaust fluid processing device 50 applies to corresponding similar components of the exhaust fluid processing device 350 of FIG. 10 and is therefore not repeated herein, and the components are not labeled in FIG. 10.

It should be noted that the exhaust fluid processing devices 150, 250, and 350 shown in FIGs. 8, 9, and 10, respectively, may comprise any one or more of the components shown in connection with FIGs. 3, 4A, 4B, 5A, 5B, 6A, and 6B. For example, in various examples, the exhaust fluid processing devices 150 (FIG. 8), 250 (FIG. 9) and 350 (FIG. 10) may comprise a membrane positioned over a centrifugal separator and/or one or both a first valve positioned in the first outlet port and a second valve positioned in the third outlet port.

The terminology used herein is for the purpose of describing particular examples only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, may be unitary with the other element, or intervening elements may be present. The term "coupled" does not necessarily indicates mechanical coupling. When an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A system (25) for a fuel cell vehicle (10), the system (25) comprising:
a fuel cell system (20) comprising at least one fuel cell stack comprising an anode and a cathode, the fuel cell stack being configured to generate electricity by an electrochemical reaction between hydrogen supplied to the anode and oxygen supplied to the cathode, the electrochemical reaction producing a fuel cell exhaust fluid as a byproduct; and
an exhaust assembly (52) comprising an exhaust conduit (54) configured to fluidly couple to the fuel cell system, the exhaust assembly comprising an exhaust fluid processing device (50, 150, 250, 350) configured to fluidly couple to the exhaust conduit (54), the exhaust fluid processing device comprising:
a housing (70) encompassing a chamber (72) and comprising an inlet port (74) configured to receive the fuel cell exhaust fluid, a first outlet port (76), a second outlet port (78), and a third outlet port (80), the housing further comprising, positioned in the chamber:
a centrifugal separator (84) comprising at least one swirler and configured to have the fuel cell exhaust fluid to pass therethrough so that the fuel cell exhaust fluid passing through the centrifugal separator is separated into liquid water, hydrogen gas, and dry exhaust vapor, wherein the first outlet port (76) is configured to allow the liquid water to exit the housing, the second outlet port (78) is configured to allow the dry vapor to exit the housing, and the third outlet port (80) is configured to allow the hydrogen gas to exit the housing,
wherein the housing (70) comprises a membrane (100) positioned in the housing below the third outlet port and above the centrifugal separator, along at least a portion of a length of the centrifugal separator.

2. The system of claim 1, wherein the third outlet port (80) is configured to fluidly couple to a third conduit (60) extending from the third outlet port (80) towards a top of a cabin (15) of the vehicle, the third conduit (60) being configured to release the hydrogen gas at the top of the cabin of the vehicle.

3. The system of claim 1 or 2, wherein the first outlet port (76) is configured to fluidly couple to a first conduit (56) that allows the liquid water to exit the exhaust conduit (54) at a bottom of the vehicle, and the second outlet port (78) is configured to fluidly couple to a second conduit (58) that allows the dry vapor to exit the exhaust conduit (54) at the bottom of the vehicle.

4. The system of any one of claims 1 to 3, wherein the first outlet port (76) comprises a first valve (76v) configured and/or controlled to selectively allow the liquid water to pass through first outlet port (76) and away from the exhaust fluid processing device (50, 150, 250, 350).

5. The system of any one of claims 1 to 4, wherein the third outlet port (80) comprises a second valve (80v) configured and/or controlled to allow the hydrogen gas to pass therethrough and away from the exhaust fluid processing device, and wherein the second valve (80v) is configured to release overpressure in the exhaust fluid processing device.

6. The system of any one of claims 1 to 5, wherein the housing (70) comprises at least one demister (82) positioned downstream of the inlet port and having a shape that conforms to a shape of an inner wall of the chamber, the at least one demister being configured to have the fuel cell exhaust fluid pass therethrough to cause at least a portion of vapor in the fuel cell exhaust fluid to be converted into water droplets, whereby liquid water is extracted from the fuel cell exhaust fluid.

7. The system of claim 6, wherein the at least one demister comprises one demister (82a) positioned upstream of the centrifugal separator or one demister (82b) positioned downstream of the centrifugal separator.

8. The system of claim 6, wherein the at least one demister comprises a first demister (82a) positioned upstream of the centrifugal separator and a second demister (82b) positioned downstream of the centrifugal separator.

9. An exhaust fluid processing device (50, 150, 250, 350) configured to process a fuel cell exhaust fluid produced by a fuel cell system (20) of a fuel cell vehicle (10) as a byproduct of an electrochemical reaction between hydrogen supplied to an anode and oxygen supplied to a cathode of a fuel cell stack of the fuel cell system, the exhaust fluid processing device (50, 150, 250, 350) comprising:
a housing (70) encompassing a chamber and comprising an inlet port (74) configured to receive the fuel cell exhaust fluid, a first outlet port (76), a second outlet port (78), and a third outlet port (80), the housing further comprising, positioned in the chamber,
a centrifugal separator (84) comprising at least one swirler and configured to have the fuel cell exhaust fluid to pass therethrough so that the exhaust fluid passing through the centrifugal separator is separated into liquid water, hydrogen gas, and dry exhaust vapor, wherein the first outlet port is configured to allow the liquid water to exit the housing, the second outlet port is configured to allow the dry vapor to exit the housing, and the third outlet port is configured to allow the hydrogen gas to exit the housing,
wherein the housing (70) comprises a membrane (100) positioned in the housing below the third outlet port (80) and above the centrifugal separator (84), along at least a portion of a length of the centrifugal separator (84).

10. The exhaust fluid processing device of claim 9, wherein the first outlet port (76) comprises a first valve (76v) configured and/or controlled to selectively allow the liquid water to pass through first outlet port (76) and away from the exhaust fluid processing device (50, 150, 250, 350).

11. The exhaust fluid processing device of claim 9 or 10, wherein the third outlet port (80) comprises a second valve (80v) configured and/or controlled to allow the hydrogen gas to pass therethrough and away from the exhaust fluid processing device, and wherein the second valve (80v) is configured to release overpressure in the exhaust fluid processing device.

12. The exhaust fluid processing device of any one of claims 9 to 11, wherein the housing (70) comprises, positioned in the chamber, at least one demister (82a, 82b) positioned downstream of the inlet port and having a shape that conforms to a shape of an inner wall of the chamber, the at least one demister being configured to have the fuel cell exhaust fluid pass therethrough to cause at least a portion of vapor in the fuel cell exhaust fluid to be converted into water droplets, whereby liquid water is extracted from the fuel cell exhaust fluid.

13. A fuel cell vehicle (10) comprising at least one system (25), the at least one system (25) comprising:
a fuel cell system (20) comprising at least one fuel cell stack comprising an anode and a cathode, the fuel cell stack being configured to generate electricity by an electrochemical reaction between hydrogen supplied to the anode and oxygen supplied to the cathode, the electrochemical reaction producing a fuel cell exhaust fluid as a byproduct; and
an exhaust assembly (52) comprising an exhaust conduit (54) configured to fluidly couple to the fuel cell system, the exhaust assembly comprising an exhaust fluid processing device (50, 150, 250, 350) configured to fluidly couple to the exhaust conduit (54), the exhaust fluid processing device (50, 150, 250, 350) comprising:
a housing (70) encompassing a chamber (72) and comprising an inlet port (74) configured to receive the fuel cell exhaust fluid, a first outlet port (76), a second outlet port (78), and a third outlet port (80), the housing further comprising, positioned in the chamber,
a centrifugal separator (84) comprising at least one swirler and configured to have the fuel cell exhaust fluid to pass therethrough so that the fuel cell exhaust fluid passing through the centrifugal separator is separated into liquid water, hydrogen gas, and dry exhaust vapor, wherein the first outlet port is configured to allow the liquid water to exit the housing, the second outlet port is configured to allow the dry vapor to exit the housing, and the third outlet port is configured to allow the hydrogen gas to exit the housing,
wherein the housing (70) comprises a membrane (100) positioned in the housing below the third outlet port and above the centrifugal separator, along at least a portion of a length of the centrifugal separator.

14. The fuel cell vehicle of claim 13, wherein the at least one system (25) comprises two systems, each comprising a corresponding fuel cell system and an exhaust assembly configured to fluidly couple to the corresponding fuel cell system.

15. The vehicle of claim 13 or 14, wherein the housing (70) comprises at least one demister (82a, 82b) positioned downstream of the inlet port and having a shape that conforms to a shape of an inner wall of the chamber, the at least one demister being configured to have the fuel cell exhaust fluid pass therethrough to cause at least a portion of vapor in the fuel cell exhaust fluid to be converted into water droplets, whereby liquid water is extracted from the fuel cell exhaust fluid.

16. A method for processing a fuel cell exhaust fluid produced by a fuel cell system (20) of a fuel cell vehicle (10), the method comprising:
routing the fuel cell exhaust fluid from the fuel cell system (20) to and through an exhaust assembly (52) comprising an exhaust conduit (54) configured to fluidly couple to the fuel cell system, the exhaust assembly (54) comprising an exhaust fluid processing device (50, 150, 250, 350) configured to fluidly couple to the exhaust conduit (54), the exhaust fluid processing device (50, 150, 250, 350) being configured to process the fuel cell exhaust fluid so as to separate the fuel cell exhaust fluid into separate flows of liquid water, hydrogen gas, and dry exhaust vapor, the exhaust fluid processing device (50, 150, 250, 350) comprising:
a housing (70) encompassing a chamber (72) and comprising an inlet port (74) configured to receive the fuel cell exhaust fluid, a first outlet port (76), a second outlet port (78), and a third outlet port (78), the housing further comprising, positioned in the chamber:
a centrifugal separator (84) comprising at least one swirler and configured to have the fuel cell exhaust fluid to pass therethrough so that the fuel cell exhaust fluid passing through the centrifugal separator is separated into the liquid water, the hydrogen gas, and the dry exhaust vapor, wherein the first outlet port is configured to allow the liquid water to exit the housing, the second outlet port is configured to allow the dry vapor to exit the housing, and the third outlet port is configured to allow the hydrogen gas to exit the housing,
wherein the housing (70) comprises a membrane (100) positioned in the housing below the third outlet port and above the centrifugal separator, along at least a portion of a length of the centrifugal separator.

17. The method of claim 16, wherein the housing (70) comprises at least one demister (82) positioned downstream of the inlet port and having a shape that conforms to a shape of an inner wall of the chamber, the at least one demister (82) being configured to have the fuel cell exhaust fluid pass therethrough to cause at least a portion of vapor in the fuel cell exhaust fluid to be converted into water droplets, whereby liquid water is extracted from the fuel cell exhaust fluid.

18. A method for processing a fuel cell exhaust fluid produced by a fuel cell system (20) of a fuel cell vehicle (10), the method comprising:
routing the fuel cell exhaust fluid from the fuel cell system (20) to and through an exhaust fluid processing (50, 150, 250, 350) device configured to process the fuel cell exhaust fluid, the exhaust fluid processing device (50, 150, 250, 350) comprising:
a housing (70) encompassing a chamber (72) and comprising an inlet port (74) configured to receive the fuel cell exhaust fluid, a first outlet port (76), a second outlet port (78), and a third outlet port (80), the housing further comprising, positioned in the chamber:
a centrifugal separator (84) comprising at least one swirler and configured to have the fuel cell exhaust fluid to pass therethrough so that the fuel cell exhaust fluid passing through the centrifugal separator is separated into liquid water, hydrogen gas, and dry exhaust vapor, wherein the first outlet port is configured to allow the liquid water to exit the housing, the second outlet port is configured to allow the dry vapor to exit the housing, and the third outlet port is configured to allow the hydrogen gas to exit the housing,
wherein the housing (70) comprises a membrane (100) positioned in the housing below the third outlet port and above the centrifugal separator, along at least a portion of a length of the centrifugal separator.

19. The method of claim 18, wherein the housing (70) comprises at least one demister (82) positioned downstream of the inlet port and having a shape that conforms to a shape of an inner wall of the chamber, the at least one demister (82) being configured to have the fuel cell exhaust fluid pass therethrough to cause at least a portion of vapor in the fuel cell exhaust fluid to be converted into water droplets, whereby liquid water is extracted from the fuel cell exhaust fluid.
